# EUROPEAN PATENT APPLICATION

(11) **EP 3 193 300 A1**
(43) Date of publication of application: **19.07.2017**
(21) Application number: 16151296.7
(22) Date of filing: 14.01.2016
(51) Int. Cl.: G06Q 30/02, H04H 60/33

(54) **METHOD AND SYSTEM FOR ANALYZING A MEDIA SIGNAL**

(71) Applicant: XroadMedia GmbH, 1100 Vienna (AT)
(72) Inventor: Kalmar, Andras, 1100 Vienna (AT); Proidl, Adolf, 1100 Vienna (AT); Schenk, Paul, 1100 Vienna (AT)
(74) Representative: De Vries & Metman

(57) **Abstract**

The invention relates to a method of analyzing a media signal. The method comprises the steps of receiving a media signal of at least one person consuming a content item, determining at least one characteristic of the content item, analyzing at least a part of an audio and/or a video portion of the media signal to determine a sentiment of the at least one person towards the content item, and determining a preference for the content item based on the determined sentiment towards the content item. The at least one characteristic of the content item is taken into account in the analysis step and/or the preference determination step. The invention also relates to a computer program product enabling a computer system to perform this method. The invention further relates to a system (41) for analyzing a media signal. The system comprises a media analyzer (43) configured to analyze at least a part of an audio and/or a video portion of a media signal to determine a sentiment of at least one person towards a content item. The media signal is received from a media capturer (47) configured to capture the media signal of the at least one person consuming the content item. The system further comprises a preference determiner (45) configured to determine a preference for the content item based on the determined sentiment towards the content item. The media analyzer (43) and/or the preference determiner (45) takes into account the at least one characteristic of the content item in the analysis and the preference determination, respectively.

## Description

### Field of the invention

The invention relates to a method of analyzing a media signal.

The invention further relates to a system for analyzing a media signal.

The invention also relates to a computer program product enabling a computer system to perform such a method.

### Background of the invention

Many recommender systems currently exist for specific types of products, including movies, TV programs, (e-)books and music, and for products in general. Relatively simple recommender systems look at which product a consumer purchases or consumes and determine what other products are purchased or consumed by other persons that also purchased or consumed this product. More advanced recommender systems determine similarities between a user and other users, e.g. based on product purchases or consumption and/or based on characteristics of users like age and gender, and determine what products similar users purchase or consume. Other advanced recommender systems determine a user's preferences for attributes, e.g. program type, genre, author, artist and actor, by asking the user to rate these attributes, by asking the user to rate products and deriving these user preferences from these ratings or by deriving these user preferences from the purchase and consumption behavior of the user.

Ai Thanh Ho, Ilusca LL Menezes, and Yousra Tagmouti. "E-MRS: Emotion-based movie recommender system", Proceedings of IADIS e-Commerce Conference, USA: University of Washington Bothell, pages 1-8, 2006, discloses a recommender system in which emotions of a user are detected in order to determine the mood of the user. The mood is preferably detected using a questionnaire, but can also be detected by analyzing a media signal, e.g. to detect emotions by voice and facial expressions. The recommender system recommends movies in dependence on the detected mood of the user, e.g. different movies when the user feels joy than when the user feels sadness.

*A* drawback of the existing recommendation systems is that their recommendations are not often enough close to the user's true preferences.

### Summary of the invention

It is a first object of the invention to provide a method of analyzing a media signal, which can be used for providing product recommendations that are close to the user's true preferences more often.

It is a second object of the invention to provide a system for analyzing a media signal, which can be used for providing product recommendations that are close to the user's true preferences more often.

According to the invention, the first object is realized in that the method of analyzing a media signal comprises the steps of receiving a media signal of at least one person consuming a content item, determining at least one characteristic of said content item, analyzing at least a part of at least one of an audio and a video portion of said media signal to determine a sentiment of said at least one person towards said content item, and determining a preference for said content item based on said determined sentiment towards said content item, wherein said at least one characteristic of said content item is taken into account in at least one of said analysis step and said preference determination step. Said method may be performed by software running on a programmable device. This software may be provided as a computer program product.

By analyzing the media signal of at least one person consuming the content item for determining a sentiment of this at least one person towards the content item instead of a mood of this at least one person, while taking into account at least one characteristic of the content item, this at least one person's true preferences can be determined better. As a result, product recommendations that are close to the at least one person's true preferences can be provided more often. For example, detecting that a viewer is sad during a comedy movie or TV program could be determined to mean that the movie or TV program does not engage the viewer and thus, that the viewer does not like the movie or TV program (enough). Detecting that a viewer is sad when a movie or TV program shows a person dying or mourning the death of someone else could be determined to mean that the movie or TV program engages the viewer and thus, that the viewer therefore likes the movie or TV program, for example.

Said step of analyzing at least a part of at least one of an audio and a video portion of said media signal may comprise determining positive observations and/or negative observations in said media signal from a set of predefined positive observations and predefined negative observations, said positive observations representing clues of a positive sentiment of said at least one person towards said content item and said negative observations representing clues of a negative sentiment of said at least one person towards said content item. This is a beneficial implementation of the analysis of the media signal for determining the sentiment of the at least one person towards the content item. A positive observation may be, for example, a person laughing during a comedy. A negative observation may be, for example, a person sleeping or almost falling asleep.

Said step of analyzing at least a part of at least one of an audio and a video portion of said media signal may further comprise determining a sum of said positive observations and/or a sum of said negative observations. These sums can be used to determine the preference for the content item or the reliability of the determined preference, as for example is described in the next paragraphs.

Said step of determining a preference for said content item may comprise determining a ratio between said sum of said positive observations and said sum of said negative observations. If the sum of positive observations is high compared to the sum of negative observations, the at least one person apparently liked the content item. If the sum of negative observations is high compared to the sum of positive observations, the at least one person apparently disliked the content. If the sums of positive and negative observations are similar, the preference could be determined as being neutral, for example.

Said method may further comprise the step of determining a confidence level of said preference based on at least one of said sum of said positive observations and said sum of said negative observations. If the sum is small, an incorrect observation may easily result in an incorrect preference being determined. If the sum is large, the risk of an incorrect preference being determined is relatively small. Determining the confidence level of the preference may involve summing the sum of positive observations and the sum of negative observations, for example. A confidence level may comprise a percentage, for example. This percentage may be 100% when the sum is at least X and sum/X when the sum is smaller than X, for example.

Said method may further comprise the step of determining said set of predefined positive observations and predefined negative observations based on at least one of said at least one characteristic of said content item. An observation may be negative or positive depending on the genre of the content item, for example. Laughter in a comedy may be considered a positive observation and laughter in sports match may be considered a negative observation, for example.

Said step of analyzing at least a part of at least one of an audio and a video portion of said media signal may comprise analyzing at least one of pitch, energy and noise level of at least part of said audio portion and/or determining a speaking rate of at least one of said at least one person from said audio portion. A high pitch, a high energy and a high speaking rate might be considered to show that the content item engages the at least one person and therefore considered to be positive observations, for example. A high noise level might be considered to show that the content item does not engage the at least one person and therefore considered to be a negative observation or might be a reason to decrease the afore-mentioned confidence level, for example.

Said step of analyzing at least a part of at least one of an audio and a video portion of said media signal may comprise determining at least one of a face location and a face expression in said video portion. A face expression may express anger, joy, sadness or puzzlement, for example. If a person is not looking at the screen, this could be considered to be a negative observation, especially for certain genres like documentaries.

Said step of analyzing at least a part of at least one of an audio and a video portion of said media signal may comprise determining at least one of laughter, crying and tension. Laughter, crying and tension can be detected in both the audio and the video portion of the media signal and are often a sign that the content item engages the viewer, although this may depend on the program type and/or the genre of the content item.

Said at least one characteristic of said content item may comprise at least one of a program type, genre and cast member of said content item. A program type is sometimes called show type. Program type is typically a classification like news, movie, music, series or sports. Genre is typically a classification like 90s, Action, Anime, Basketball, Documentary or Drama. For example, an observation may be positive or negative in dependence on the program type and/or genre of the content item. Similarly, an observation may be positive or negative in dependence on a cast member. For example, determining laughter when a comedian appears in a serious news program might be considered to be a positive observation and determining laughter when an anchor appears in a serious news program might be considered to be a negative observation.

Said method may further comprise the step of selecting said at least part of said at least one of an audio and a video portion of said media signal for analysis based on at least one of said at least one characteristic of said content item. Based on metadata associated with the content item and/or on an analysis of the content item itself, one or more parts of the content item may be selected, for example. If the content item is a sports match, these parts may comprise, for example, highlights of the match like a goal being scored or a yellow or red card being given in a soccer match.

Said step of analyzing at least a part of at least one of an audio and a video portion of said media signal may comprise determining a sentiment of each of a plurality of persons towards said content item. This may involve distinguishing between different faces in the video portion and distinguishing between different voices in the audio portion. This is especially beneficial if the recommender system uses different user profiles for different persons in a group.

Said step of determining a preference for said content item may comprise determining a preference for said content item based on a sentiment determined for all of, a selected one of, or selected ones of said plurality of persons towards said content item. When a sentiment of a plurality of persons towards the content item has been determined, the recommender system or the user of the recommender system may be able to select whose sentiment should be taken into account. When the determined preference is stored in a user profile, preferably only sentiments of persons associated with the user profile are taken into account.

According to the invention, the second object is realized in that the system for analyzing a media signal comprises a media analyzer configured to analyze at least a part of at least one of an audio and a video portion of a media signal to determine a sentiment of at least one person towards a content item, said media signal being received from a media capturer configured to capture said media signal of said at least one person consuming said content item, and a preference determiner configured to determine a preference for said content item based on said determined sentiment towards said content item, wherein at least one of said media analyzer and said preference determiner takes into account at least one characteristic of said content item in said analysis and said preference determination, respectively. Said at least one characteristic of said content item may comprise at least one of a program type, genre and cast member of said content item. Determining at least one characteristic of the content item may comprise receiving one or more characteristics of the content item from a content analyzer and/or receiving one or more characteristics of the content item from a metadata provider, for example.

Said media analyzer may be configured to determine positive observations and/or negative observations in said media signal from a set of predefined positive observations and predefined negative observations, said positive observations representing clues of a positive sentiment of said at least one person towards said content item and said negative observations representing clues of a negative sentiment of said at least one person towards said content item. Said media analyzer may be further configured to determine a sum of said positive observations and/or a sum of said negative observations.

Said preference determiner may be configured to determine a ratio between said sum of said positive observations and said sum of said negative observations. Said preference determiner may be further configured to determine a confidence level of said preference based on at least one of said sum of said positive observations and said sum of said negative observations.

Said preference determiner may be further configured to determine said set of predefined positive observations and predefined negative observations based on at least one of said at least one characteristic of said content item.

Said media analyzer may be configured to analyze at least one of pitch, energy and noise level of at least a part of said audio portion and/or determining a speaking rate of at least one of said at least one person from said audio portion. Said media analyzer may be configured to determine at least one of a face location and a face expression in said video portion. Said media analyzer may be configured to determine at least one of laughter, crying and tension.

Said media analyzer may be further configured to select said at least part of said at least one of an audio and a video portion of said media signal for analysis based on at least one of said at least one characteristic of said content item.

Said media analyzer may be further configured to determine a sentiment of each of a plurality of persons towards said content item. Said preference determiner may be further configured to determine a preference for said content item based on a sentiment determined for all of, a selected one of or selected ones of said plurality of persons towards said content item.

Moreover, a computer program for carrying out the methods described herein, as well as a non-transitory computer readable storage-medium storing the computer program are provided. A computer program may, for example, be downloaded by or uploaded to an existing device or be stored upon manufacturing of these systems.

A non-transitory computer-readable storage medium stores at least one software code portion, the software code portion, when executed or processed by a computer, being configured to perform executable operations comprising: receiving a media signal of at least one person consuming a content item, determining at least one characteristic of said content item, analyzing at least a part of at least one of an audio and a video portion of said media signal to determine a sentiment of said at least one person towards said content item, and determining a preference for said content item based on said determined sentiment towards said content item, wherein said at least one characteristic of said content item is taken into account in at least one of said analysis and said preference determination.

As will be appreciated by one skilled in the art, aspects of the present invention may be embodied as a system, a device, a method or a computer program product. Accordingly, aspects of the present invention may take the form of an entirely hardware embodiment, an entirely software embodiment (including firmware, resident software, micro-code, etc.) or an embodiment combining software and hardware aspects that may all generally be referred to herein as a "circuit," "module" or "system." Functions described in this disclosure may be implemented as an algorithm executed by a processor/microprocessor of a computer. Furthermore, aspects of the present invention may take the form of a computer program product embodied in one or more computer readable medium(s) having computer readable program code embodied, e.g., stored, thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples of a computer readable storage medium may include, but are not limited to, the following: a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing. In the context of the present invention, a computer readable storage medium may be any tangible medium that can contain, or store, a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber, cable, RF, etc., or any suitable combination of the foregoing. Computer program code for carrying out operations for aspects of the present invention may be written in any combination of one or more programming languages, including an object oriented programming language such as Java(TM), Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer, or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present invention are described below with reference to flowchart illustrations and/or block diagrams of methods, apparatus (systems), and computer program products according to embodiments of the present invention. It will be understood that each block of the flowchart illustrations and/or block diagrams, and combinations of blocks in the flowchart illustrations and/or block diagrams, can be implemented by computer program instructions. These computer program instructions may be provided to a processor, in particular a microprocessor or a central processing unit (CPU), of a general purpose computer, special purpose computer, or other programmable data processing apparatus to produce a machine, such that the instructions, which execute via the processor of the computer, other programmable data processing apparatus, or other devices, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

The flowchart and block diagrams in the figures illustrate the architecture, functionality, and operation of possible implementations of devices, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the blocks may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustrations, and combinations of blocks in the block diagrams and/or flowchart illustrations, can be implemented by special purpose hardware-based systems that perform the specified functions or acts, or combinations of special purpose hardware and computer instructions.

### Brief description of the Drawings

These and other aspects of the invention are apparent from and will be further elucidated, by way of example, with reference to the drawings, in which:
- Fig.1 is a flow diagram of the method of the invention, including optional steps;
- Fig.2 is a flow diagram of a second embodiment of the method of the invention;
- Fig.3 is a flow diagram of a third embodiment of the method of the invention;
- Fig.4 is a block diagram of a first embodiment of the system of the invention;
- Fig.5 is a block diagram of a second embodiment of the system of the invention;
- Fig.6 is a block diagram of a third embodiment of the system of the invention; and
- Fig.7 is a block diagram of an exemplary data processing system for performing the method of the invention.

Corresponding elements in the drawings are denoted by the same reference numeral.

### Detailed description of the Drawings

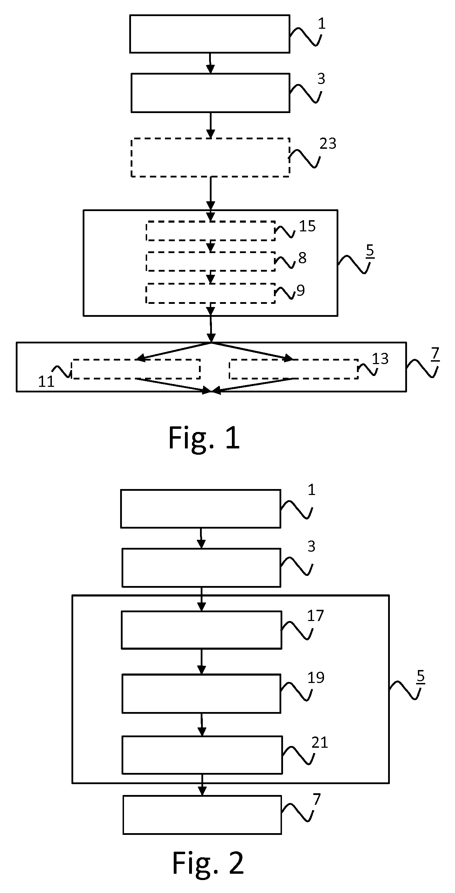

The method of analyzing a media signal comprises at least four steps, see **Fig.1****.** A step **1** comprises receiving a media signal of at least one person consuming a content item. A step **3** comprises determining at least one characteristic of the content item. A step 5 comprises analyzing at least a part of at least one of an audio and a video portion of the media signal to determine a sentiment of the at least one person towards the content item. A step **7** comprises determining a preference for the content item based on the determined sentiment towards the content item. The at least one characteristic of the content item is taken into account in at least one of step **5** and step **7.** The at least one characteristic of the content item may comprise at least one of a program type, genre and cast member of the content item, for example.

In a first embodiment of the method, step **5** comprises a step **8** of determining positive observations and/or negative observations in the media signal from a set of predefined positive observations and predefined negative observations. The positive observations represent clues of a positive sentiment of the at least one person towards the content item and the negative observations represent clues of a negative sentiment of the at least one person towards the content item.

In this first embodiment, step **5** may further comprise a step **9** of determining a sum of positive observations and/or a sum of negative observations. Step **9** may comprise counting the amount of positive observations and/or the amount of negative observations, for example. If at least one of the positive observations and/or the negative observations includes a non-binary value, e.g. an intensity level and/or a confidence level for the particular observation, it may not be possible to simply count the amount of positive observations and/or the amount of negative observations. In this case, step **8** or step **9** may involve determining that an observation is usable (e.g. positive or negative) when the intensity level and/or the confidence level of the observation exceeds a certain threshold, for example. Alternatively, the non-binary values may be used as weights in determining the sum of positive observations and/or the sum of negative observations in step **9,** for example. These sums can be used in an optional step **11** of determining a ratio between the sum of positive observations and the sum of negative observations and/or in an optional step **13** of determining a confidence level of the preference based on at least one of the sum of positive observations and the sum of negative observations.

In the first embodiment, step **5** may further comprise a step **15** of determining the set of predefined positive observations and predefined negative observations based on at least one of the at least one characteristic of the content item.

In the same or in a different embodiment, the method further comprises a step **23** of selecting the at least part of the at least one of an audio and a video portion of the media signal for analysis based on at least one of the at least one characteristic of the content item.

In a second embodiment, see **Fig.2****,** step **5** comprises steps **17, 19** and **21.** In a different embodiment, the method comprises only one or two of steps **17, 19** and **21.** A step **17** comprises analyzing at least one of pitch, energy and noise level of at least part of the audio portion and/or determining a speaking rate of at least one of the at least one person from the audio portion. The noise level may be determined by identifying relevant sounds, e.g. laughter, in the audio portion and calculating a signal-to-noise ratio (SNR), taking the relevant sounds as signal. The speaking rate may be based on the amount of words or syllables spoken per time period, e.g. per minute or second, or on the length of the pauses between spoken words, for example. A step **19** comprises determining at least one of a face location and a face expression in the video portion. A step **21** comprises determining at least one of laughter, crying and tension. Although **Fig. 2** shows steps **17, 19** and **21** being performed in a certain sequence, they may be performed in any sequence and some or all steps may be performed in parallel. Step **17** may further comprise detecting (certain) words spoken by the at least one person.

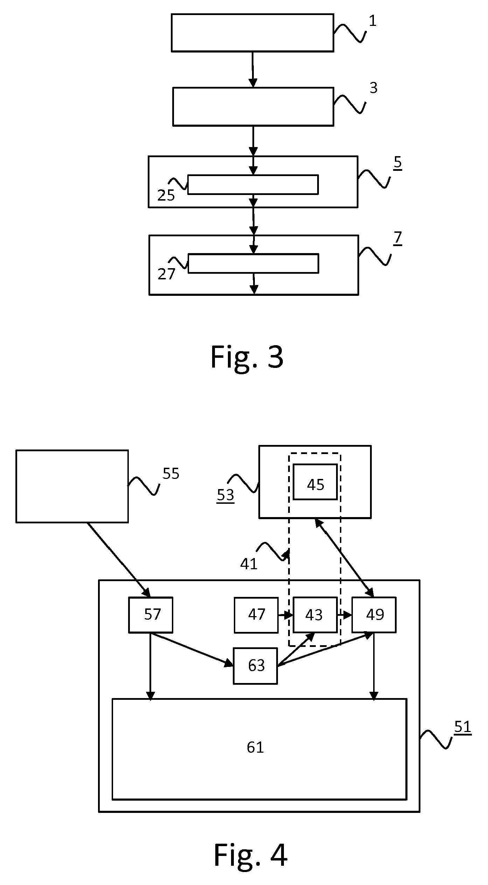

In a third embodiment, see **Fig.3****,** step **5** comprises a step **25** and step **7** comprises a step **27.** Step **25** comprises determining a sentiment of each of a plurality of persons towards the content item. Step **27** comprises determining a preference for the content item based on a sentiment determined for all of, a selected one of or selected ones of the plurality of persons towards the content item. If more than one user is consuming the content, and the identified observations for different users suggest different levels of preference, then the resulting preference level may be an average of determined individual sentiments. If more than one user is consuming the content, individual preference levels per user may be determined by separating the acoustical and/or visual signal into signals for the individual users. The decision logic of the preference determiner may combine the observations found within the analyzed media signal with other information about the user's preference level, e.g. from a user's stored profile, from a user's expression of opinion via like/dislike buttons in a user interface or by analyzing other types of signals, e.g. text, e.g. messages, written by the user. A recommender system may use the determined preference to provide recommendations.

The system **41** of the invention comprises a media analyzer **43** and a preference determiner **45,** which are shown in **Fig. 4****.** The media analyzer **43** is configured to analyze at least a part of at least one of an audio and a video portion of a media signal to determine a sentiment of at least one person towards a content item, the media signal being received from a media capturer **47** configured to capture the media signal of the at least one person consuming the content item. The preference determiner **45** is configured to determine a preference for the content item based on the determined sentiment towards the content item. At least one of the media analyzer **43** and the preference determiner **45** takes into account at least one characteristic of the content item in their analysis and preference determination, respectively. Determining at least one characteristic of the content item may comprise receiving one or more characteristics of the content item from a content analyzer **63** and/or receiving one or more characteristics of the content item from a metadata provider, for example. In this embodiment, the preference determiner **45** does not analyze the content item itself.

In **Fig.4****,** the preference determiner **45** is part of a service provider **53** and the media analyzer **43** is part of a client **51.** The media analyzer **43** may be a software application embedded in, installed on or downloaded to the client **51,** for example. The client **51** may be a (Smart) TV, a set top box (e.g. a digital satellite or cable receiver), a PC, a laptop, a tablet, a smartphone, or an in-flight entertainment unit, for example. In the embodiment of **Fig.4****,** the client **51** comprises a display **61** on which content items and a user interface of (e.g. a recommender system of) the service provider **53** are shown. The client **51** comprises a receiver **57** for receiving content items from a content provider **55.** The client **51** further comprises a transceiver **49** for sending results from the analysis by media analyzer **43** to preference determiner **45** and for receiving data from the service provider **53** comprising the user interface or to be included in the user interface displayed on the display **61.** The user interface may provide a list of recommended content items, for example. These may be content items that are scheduled to be broadcast, that have been recorded on a local or remote storage facility or that are available on demand, for example. In the embodiment of **Fig.4****,** the media capturer **47** is part of the client **51,** but part(s) of or all of the media capturer **47** may alternatively be located outside the client **51.**

In the embodiment of **Fig.4****,** the client **51** further comprises the content analyzer **63.** This content analyzer **63** is configured to determine one or more characteristics of the content item received by the receiver **57.** One or more of these characteristics are transmitted to the preference determiner **45** using transceiver **49** and/or provided to the media analyzer **43.** In the latter case, the media analyzer **43** may be further configured to select the at least part of the at least one of an audio and a video portion of the media signal for analysis based on one or more of the provided characteristics. Alternatively, or additionally, the content analyzer **63** may be configured to determine weights for one or more parts of the at least one of the audio and the video portion. These weights can be used to determine whether a candidate observation should indeed be considered as a (positive or negative) observation. The preference determiner **45** may not only receive one or more content characteristics determined by the content analyzer **63,** but may also be able to determine one or more characteristics, and to determine the above-mentioned weights, from metadata received from a metadata provider.

The media capturer **47** may comprise a camera and/or a microphone, for example. The receiver **57** may comprise a broadcast (e.g. DVB-C(2), DVB-T(2), DVB-S(2) or ATSC compliant) receiver, a Wi-Fi receiver, a 3G/4G/5G cellular receiver and/or an Ethernet receiver, for example. The transceiver **49** may comprise a Wi-Fi receiver, a 3G/4G/5G cellular receiver and/or an Ethernet receiver, for example. The media analyzer **43** and the content analyzer **63** may be implemented in software which is executed by one or more application-specific or general-purpose processors, for example. These processors may be made by Intel, AMD, Qualcomm, MediaTek or ARM, for example. The display **61** may be an LCD, projection or OLED display, for example. The content provider **55** and the service provider **53** may comprise one or more servers, e.g. running a Windows or Unix-based operating system, one or more network appliances and/or one or more storage devices.

As a first example, the client **51** may comprise a smart television set that features a program guide and the media capturer **47** may comprise a web camera with face recognition and a microphone. While the user(s) consume content on the display **61,** the web camera identifies the location of their faces and a facial expression analysis is performed for each face. Additionally, the audio signal picked up by the microphone is cleaned by removing all contributions from the audio signals reproduced by the television set and general background noise. The content item being reproduced is directly associated with one entry in the program guide, carrying semantic information about the reproduced content item. The facial expressions are monitored for characteristic postures and the cleaned audio signal is watched for known patterns like cheers or outcries.

The judgement of the level of user preference for a content item is best done using the knowledge of the content item's genre. For example, if the system frequently observes a facial expression of type A showing shock while the user is watching a horror movie, this shows engagement of the user with the content, and is therefore judged as a positive observation. The same facial expression, i.e. type A, observed frequently while the user is watching a documentary indicates unnatural arousal, and is therefore judged as negative observation. Additionally, unknown facial expressions and cultural heuristics can be taken into account. For example, if a user repeatedly shows a facial expression outside of the characteristic postures known to the system, it may add that new expression to the characteristic expressions and try to learn how to judge such an expression. The learning can be either based on explicit user ratings of the viewed content, e.g. if the user rated a game show as a "like", during whose consumption the user had frequently shown the new expression, then the system will remember, that such new expression should be considered a positive observation, if observed while a game show is being watched.

Some smart TV face recognition algorithms don't only recognize the location of faces, but are also capable of recognizing and therefore identifying a person. In this case, facial expressions can be observed per user. For collectivistic societies some open facial expressions may typically be suppressed by the viewers if content is watched together with others, while they are not suppressed when one person watches the content alone. For example, when watching collectively the feeling of disgust is not expressed in the face, but an artificially neutral or acknowledging expression showing teeth is assumed while nodding. Therefore, depending on the country of application, the judgement of whether an observation is positive or negative may depend on whether one or whether more persons are consuming the content item.

The audio signal can be evaluated in a similar way, i.e. while taking into account (parts) of the content item's metadata, e.g. if a group of users watches a live sports event, then boo sounds don't necessarily mean that the users don't like the content. On the contrary, it means that another live sport event featuring the same two teams should be definitely recommended, as the users have a strong interest in the outcome of the game. However, boo sounds detected while a user is watching a theatrical performance are a strong indicator for a negative observation. The rating contributions are communicated to the preference determiner, specifying for which content item they were observed. This allows the television set to suggest most attractive content items to watch each time the device is turned on.

As a second example, the client **51** may be a typical second screen device, like an iPad, which runs an application (sometimes referred to as "app"). The media capturer **47** may comprise a web camera with face recognition and a microphone. The application allows a user to browse the program guide of the user's entertainment system and automatically synchronizes with the content item the user is consuming by using a service called Shazam. This service listens via the microphone to the music or video program the user is consuming and identifies the content item as well as the playback position inside of the content item.

As the user will frequently pick up the second screen device to either check the names and biographies of the actors that just appeared on screen, read the lyrics of the song that is playing or the comments that are posted along with a TV program, or send a chat message from the application to engage with friends, with the content producers, or with a community watching a show together, the client **51** will be frequently located close to the user. This allows its wide angle web camera to monitor the user's facial expressions, also when the user is not actively using the second screen device. The facial expressions are evaluated in the same way as described in the first example, but the microphone might not be usable for determining additional cues, as Shazam is using it for content identification. The rating contributions are communicated to the preference determiner **45,** specifying for which content item they were observed. This allows the application to highlight the most attractive content items for its user in the program guide.

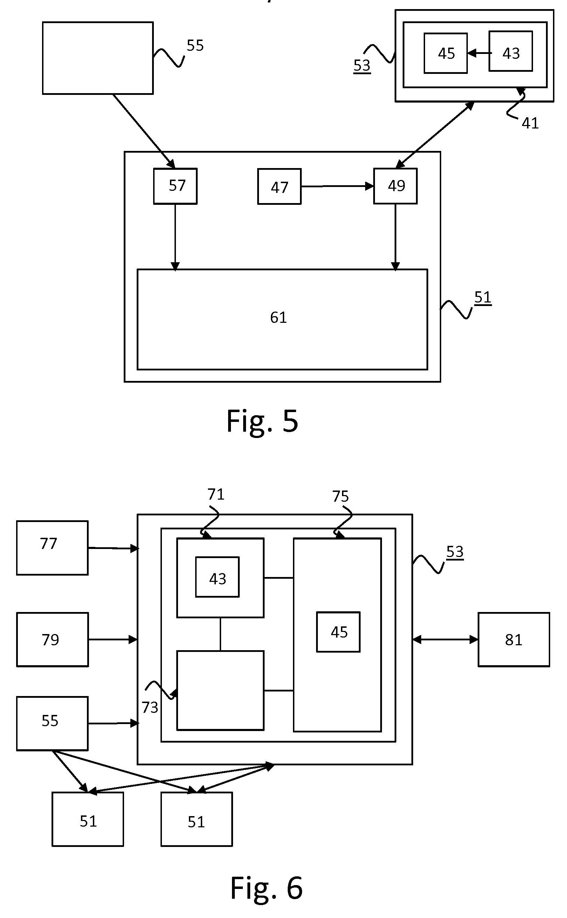

While in the embodiment of **Fig.4****,** the media analyzer **43** is part of the client **51,** in the embodiment of **Fig.5**, the media analyzer **43** is part of the service provider **53.** In this embodiment, the service provider **53** comprises the system **41.** Although no content analyzer is shown in **Fig.5**, a content analyzer could be part of client **51** or of service provider **53.** In the latter case, the service provider **53** may receive the content item or a smaller (e.g. downscaled) version of the content item from the content provider **55** or from the client **51.** In the embodiment of **Fig.5**, the media capturer **47** transmits the captured media signal of the at least one person consuming the content item, or a smaller version thereof, to the media analyzer **43** using transceiver **49.**

**Fig. 6** shows a third embodiment of the system of the invention. In this embodiment, the service provider **53** comprises a metadata processor **71,** an analytics component **73** and a discovery component **75.** The metadata processor **71** ingests, analyses and enhances metadata received from metadata provider **79** or content provider **55,** advertising provided by advertising provider **77** and user data. The discovery component **75** comprises content discovery & recommendation algorithms and business logic, including the preference determiner **45.** The analytics component **73** provides analysis and reporting data and graphics. The discovery component **75** is coupled to a manager component **81.** The manager component **81** is a tool for service providers to manage and configure the discovery component **75.** In this embodiment, the metadata processor **71** comprises the media analyzer **43.** Alternatively, or additionally, the media analyzer **43** may be part of a client **51,** for example.

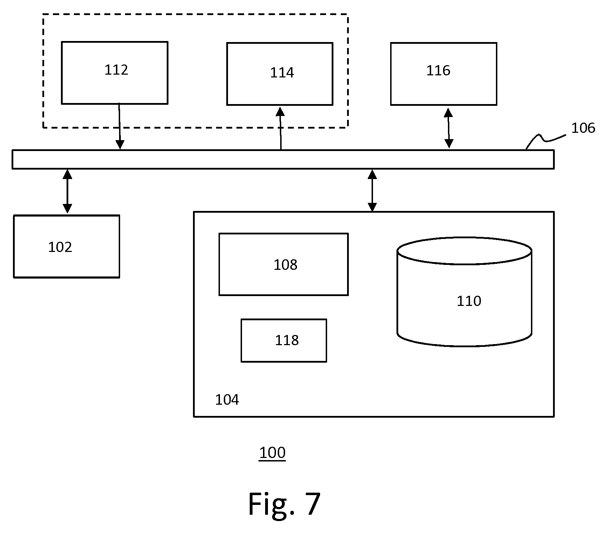

**Fig. 7** depicts a block diagram illustrating an exemplary data processing system that may perform the methods as described with reference to **Figs. 1 to 3****.**

As shown in **Fig. 7****,** the data processing system **100** may include at least one processor **102** coupled to memory elements **104** through a system bus **106.** As such, the data processing system may store program code within memory elements **104.** Further, the processor **102** may execute the program code accessed from the memory elements **104** via a system bus **106.** In one aspect, the data processing system may be implemented as a computer that is suitable for storing and/or executing program code. It should be appreciated, however, that the data processing system **100** may be implemented in the form of any system including a processor and a memory that is capable of performing the functions described within this specification.

The memory elements **104** may include one or more physical memory devices such as, for example, local memory **108** and one or more bulk storage devices **110.** The local memory may refer to random access memory or other non-persistent memory device(s) generally used during actual execution of the program code. A bulk storage device may be implemented as a hard drive or other persistent data storage device. The processing system **100** may also include one or more cache memories (not shown) that provide temporary storage of at least some program code in order to reduce the number of times program code must be retrieved from the bulk storage device **110** during execution.

Input/output (I/O) devices depicted as an input device **112** and an output device **114** optionally can be coupled to the data processing system. Examples of input devices may include, but are not limited to, a keyboard, a pointing device such as a mouse, or the like. Examples of output devices may include, but are not limited to, a monitor or a display, speakers, or the like. Input and/or output devices may be coupled to the data processing system either directly or through intervening I/O controllers.

In an embodiment, the input and the output devices may be implemented as a combined input/output device (illustrated in **Fig. 7** with a dashed line surrounding the input device **112** and the output device **114**). An example of such a combined device is a touch sensitive display, also sometimes referred to as a "touch screen display" or simply "touch screen". In such an embodiment, input to the device may be provided by a movement of a physical object, such as e.g. a stylus or a finger of a user, on or near the touch screen display.

A network adapter **116** may also be coupled to the data processing system to enable it to become coupled to other systems, computer systems, remote network devices, and/or remote storage devices through intervening private or public networks. The network adapter may comprise a data receiver for receiving data that is transmitted by said systems, devices and/or networks to the data processing system **100,** and a data transmitter for transmitting data from the data processing system **100** to said systems, devices and/or networks. Modems, cable modems, and Ethernet cards are examples of different types of network adapter that may be used with the data processing system **100.**

As pictured in **Fig. 7****,** the memory elements **104** may store an application **118.** In various embodiments, the application **118** may be stored in the local memory **108,** the one or more bulk storage devices **110,** or separate from the local memory and the bulk storage devices. It should be appreciated that the data processing system **100** may further execute an operating system (not shown in **Fig. 7**) that can facilitate execution of the application **118.** The application **118,** being implemented in the form of executable program code, can be executed by the data processing system **100,** e.g., by the processor **102.** Responsive to executing the application, the data processing system **100** may be configured to perform one or more operations or method steps described herein.

Various embodiments of the invention may be implemented as a program product for use with a computer system, where the program(s) of the program product define functions of the embodiments (including the methods described herein). In one embodiment, the program(s) can be contained on a variety of non-transitory computer-readable storage media, where, as used herein, the expression "non-transitory computer readable storage media" comprises all computer-readable media, with the sole exception being a transitory, propagating signal. In another embodiment, the program(s) can be contained on a variety of transitory computer-readable storage media. Illustrative computer-readable storage media include, but are not limited to: (i) non-writable storage media (e.g., read-only memory devices within a computer such as CD-ROM disks readable by a CD-ROM drive, ROM chips or any type of solid-state non-volatile semiconductor memory) on which information is permanently stored; and (ii) writable storage media (e.g., flash memory, floppy disks within a diskette drive or hard-disk drive or any type of solid-state random-access semiconductor memory) on which alterable information is stored. The computer program may be run on the processor 102 described herein.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of embodiments of the present invention has been presented for purposes of illustration, but is not intended to be exhaustive or limited to the implementations in the form disclosed. Many modifications and variations will be apparent to those of ordinary skill in the art without departing from the scope and spirit of the present invention. The embodiments were chosen and described in order to best explain the principles and some practical applications of the present invention, and to enable others of ordinary skill in the art to understand the present invention for various embodiments with various modifications as are suited to the particular use contemplated.

## Claims

1. A method of analyzing a media signal, comprising the steps of:
- receiving (1) a media signal of at least one person consuming a content item;
- determining (3) at least one characteristic of said content item;
- analyzing (5) at least a part of at least one of an audio and a video portion of said media signal to determine a sentiment of said at least one person towards said content item; and
- determining (7) a preference for said content item based on said determined sentiment towards said content item,
wherein said at least one characteristic of said content item is taken into account in at least one of said analysis step (5) and said preference determination step (7).

2. A method as claimed in claim 1, wherein said step of analyzing (5) at least a part of at least one of an audio and a video portion of said media signal comprises determining (8) positive observations and/or negative observations in said media signal from a set of predefined positive observations and predefined negative observations, said positive observations representing clues of a positive sentiment of said at least one person towards said content item and said negative observations representing clues of a negative sentiment of said at least one person towards said content item.

3. A method as claimed in claim 2, wherein said step of analyzing (5) at least a part of at least one of an audio and a video portion of said media signal further comprises determining (9) a sum of said positive observations and/or a sum of said negative observations.

4. A method as claimed in claim 3, wherein said step of determining (7) a preference for said content item comprises determining (11) a ratio between said sum of said positive observations and said sum of said negative observations.

5. A method as claimed in claim 3 or 4, further comprising the step of determining (13) a confidence level of said preference based on at least one of said sum of said positive observations and said sum of said negative observations.

6. A method as claimed in any one of claims 2 to 5, further comprising the step of determining (15) said set of predefined positive observations and predefined negative observations based on at least one of said at least one characteristic of said content item.

7. A method as claimed in any one of claims 1 to 6, wherein said step of analyzing (5) at least a part of at least one of an audio and a video portion of said media signal comprises analyzing (17) at least one of pitch, energy and noise level of at least part of said audio portion and/or determining a speaking rate of at least one of said at least one person from said audio portion.

8. A method as claimed in any one of claims 1 to 7, wherein said step of analyzing (5) at least a part of at least one of an audio and a video portion of said media signal comprises determining (19) at least one of a face location and a face expression in said video portion.

9. A method as claimed in any one of claims 1 to 8, wherein said step of analyzing (5) at least a part of at least one of an audio and a video portion of said media signal comprises determining (21) at least one of laughter, crying and tension.

10. A method as claimed in any one of claims 1 to 9, wherein said at least one characteristic of said content item comprises at least one of a program type, genre and cast member of said content item.

11. A method as claimed in any one of claims 1 to 10, further comprising the step of selecting (23) said at least part of said at least one of an audio and a video portion of said media signal for analysis based on at least one of said at least one characteristic of said content item.

12. A method as claimed in any of claims 1 to 11, wherein said step of analyzing (5) at least a part of at least one of an audio and a video portion of said media signal comprises determining (25) a sentiment of each of a plurality of persons towards said content item.

13. A method as claimed in claim 12, wherein said step of determining (7) a preference for said content item comprises determining (27) a preference for said content item based on a sentiment determined for all of, a selected one of or selected ones of said plurality of persons towards said content item.

14. A computer program or suite of computer programs comprising at least one software code portion or a computer program product storing at least one software code portion, the software code portion, when run on a computer system, being configured for performing the method of any one of claims 1 to 13.

15. A system (41) for analyzing a media signal, comprising:
a media analyzer (43) configured to analyze at least a part of at least one of an audio and a video portion of a media signal to determine a sentiment of at least one person towards a content item, said media signal being received from a media capturer (47) configured to capture said media signal of said at least one person consuming said content item; and
a preference determiner (45) configured to determine a preference for said content item based on said determined sentiment towards said content item,
wherein at least one of said media analyzer (43) and said preference determiner (45) takes into account at least one characteristic of said content item in said analysis and said preference determination, respectively.
